# EUROPÄISCHE PATENTSCHRIFT

(11) **EP 0 854 673 B1**
(45) Veröffentlichungstag und Bekanntmachung des Hinweises auf die Patenterteilung: **24.03.1999**
(21) Anmeldenummer: 96928393.6
(22) Anmeldetag: 30.07.1996
(51) Int. Cl.: A01D 69/02

(54) **AKKU-RASENMÄHER**
ACCUMULATOR-POWERED LAWN-MOWER
TONDEUSE A GAZON A ACCUMULATEURS

(30) Priorität: 01.08.1995 DE 19528167
(43) Veröffentlichungstag der Anmeldung: 29.07.1998
(73) Patentinhaber: WOLF-Geräte GmbH Vertriebsgesellschaft KG, D-57518 Betzdorf/Sieg (DE)
(72) Erfinder: WOLF, Gregor, D-57517 Betzdorf (DE)
(74) Vertreter: Koch, Günther, Dipl.-Ing.
(86) Internationale Anmeldenummer: EP9603350
(87) Internationale Veröffentlichungsnummer: WO9704638

(56) Entgegenhaltungen:
- EP-A- 0 466 306
- WO-A-95/08256
- WO-A-96/05719
- DE-A- 2 210 557
- DE-U- 9 313 032
- FR-A- 2 661 066
- US-A- 3 973 378
- US-A- 4 930 300

## Beschreibung

Die Erfindung bezieht sich auf einen Rasenmäher mit einem durch eine aufladbare Batterie gespeisten Elektromotor zum Antrieb der Schneidwerkzeuge mit den im Oberbegriff des Patentanspruchs 1 angegebenen Merkmalen. Ein solcher Rasenmäher ist aus der WO 95/08 256 bekannt. Hierbei sind die Verbindungskontakte zwischen Batterie und Chassis als Steckkontakte ausgebildet, und diese Steckkontakte bilden gleichzeitig die mechanischen Festlegemittel, die die Batterie in einer Halterung des Rasenmäherchassis festlegen sollen. Dabei sind die am Batteriedeckel festgelegten Kontaktbuchsen in diesem Deckel schwimmend, d.h. seitlich verschiebbar, gelagert, damit auch bei nicht zielgenauem Aufsetzen auf die Stiftstecker im Rasenmäherchassis eine Kontaktierung erfolgen kann. Infolge der schwimmenden Lagerung ist eine mechanische Festlegung der Batterie im Chassis nur begrenzt möglich. Auch ist insbesondere bei auftretenden Vibrationen eine sichere Kontaktgabe nicht gewährleistet, insbesondere wenn man die hohen Ströme berücksichtigt, die im Betrieb eines solchen Rasenmähers fließen.

Der Erfindung liegt daher die Aufgabe zugrunde, die Lagerung der Batterie in der Chassishalterung zu verbessern. Gelöst wird die gestellte Aufgabe durch die im Kennzeichnungsteil des Patentanspruchs 1 angegebenen Merkmale. Durch die Sperrriegel wird die Batterie im Batterieschacht formschlüssig gesichert, und sie kann auch dann nicht aus ihrer Halterung herausfallen, wenn der Rasenmäher aus irgendwelchen Gründen gekippt oder umgewendet wird. Die Verriegelungsmittel kommen automatisch in Eingriff, wenn der am Batteriegehäuse ansetzende Handgriff umgelegt wird. Ebenso erfolgt eine automatische Entriegelung, wenn der Handgriff hochgeklappt wird, um die Batterie am Griff zu erfassen und herauszunehmen, damit sie an einer anderen Stelle geladen werden kann.

Die elektrische Kontaktgabe ist von den mechanischen Festlegemitteln völlig getrennt. Da diese Kontaktierungsmittel gemäß den Ansprüchen 10 und 11 als Schleifkontakte ausgebildet sind, ist beim Herausnehmen oder Einführen der Batterie keine große Kraft zu überwinden, weil die Kontakte als Schleifkontakte ausgebildet sind. Dagegen müssen erhebliche Kräfte ausgeübt werden, wenn, wie beim Stande der Technik, die gleichzeitig die mechanische Festlegung bewirkenden Steckkontakte ineinandergesteckt bzw. auseinandergerissen werden müssen, weil die Steckkontakte der Verschiebung einen ungleich höheren Widerstand entgegensetzen.

Die Ausbildung der Schleifkontakte gemäß der Erfindung bewirkt auch eine Selbstreinigung der Kontaktflächen, so daß stets eine sichere Kontaktgabe gewährleistet ist.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine schematische Darstellung der in einem Rasenmäher eingesetzten Batterie mit den Festlegemitteln;
Fig. 2 eine schematische Darstellung der Batterie mit den Kontaktierungsmitteln;
Fig. 3 eine perspektivische Darstellung der mit dem Handgriff gekuppelten Verriegelungsmittel;
Fig. 4 eine perspektivische, teilweise aufgebrochene Ansicht des Batterieschachts eines Rasenmähers mit elastisch abgestützter Batterie;
Fig. 5 einen Teilvertikalschnitt der Batteriehalterung und Batteriekontaktierung.

In der Zeichnung sind nur die erfindungswesentlichen Teile dargestellt, nämlich die Batterie, die Batteriehalterung und -verriegelung sowie die Kontaktierung, während die Einzelteile des Rasenmähers lediglich andeutungsweise angegeben sind. Der Rasenmäher, der auf seinem Chassis den Schacht zum Einsetzen der Batterie aufweist, kann in verschiedener Weise ausgebildet sein. Er besitzt in bekannter Weise einen Elektromotor, der durch die Batterie 10 über nicht dargestellte Verbindungskabel gespeist wird. Die Batterie 10 ist ein elektrochemisches Sekundärelement, und hierfür kommen in erster Linie Nickelcadmiumbatterien oder Bleibatterien in Betracht. Die Batterie befindet sich in einem Gehäuse, und das Bezugszeichen 10 bezeichnet das Gehäuse mit eingebauter Batterie.

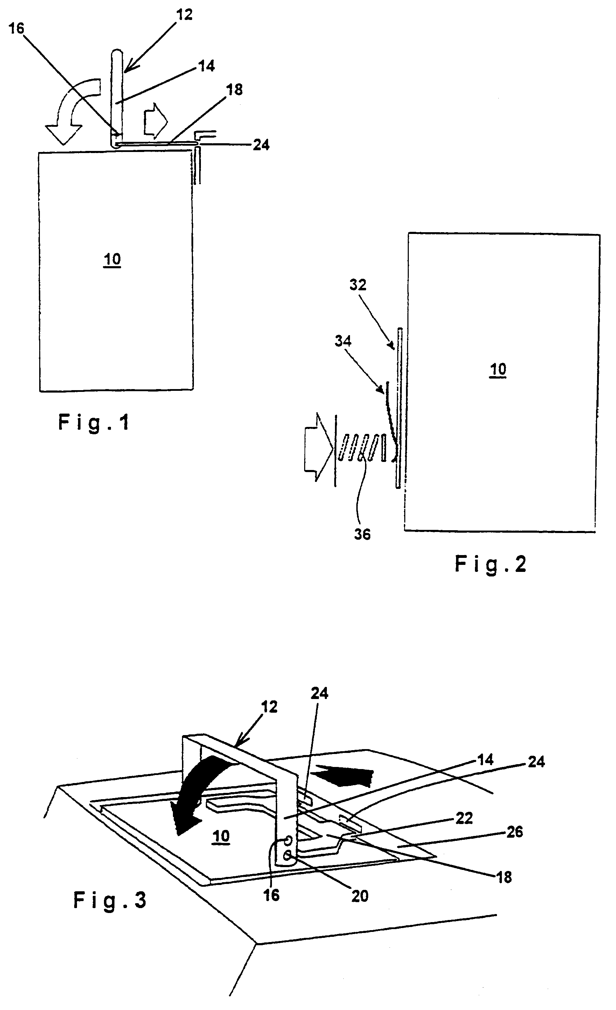

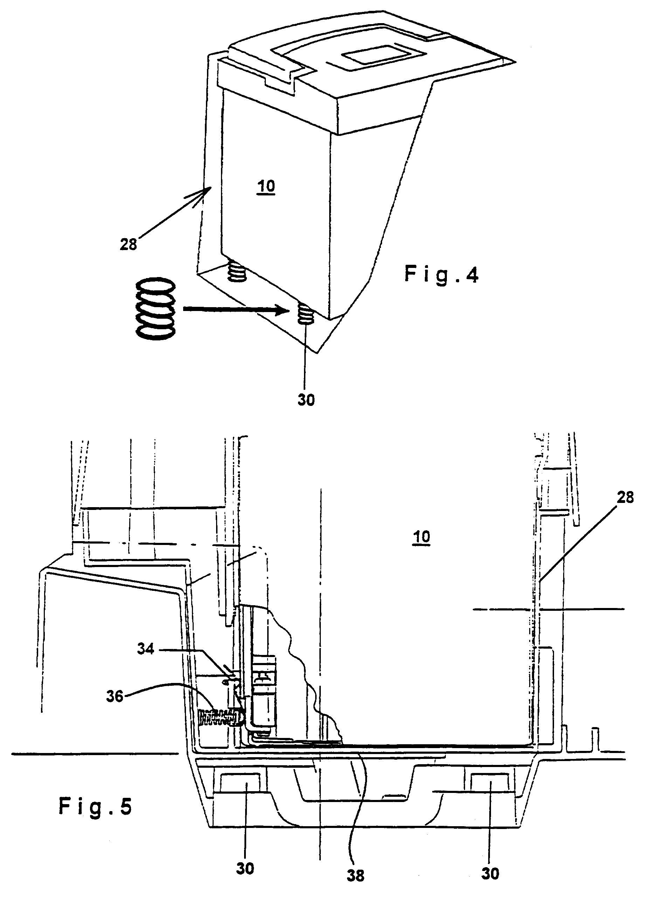

Das Batteriegehäuse trägt einen Handgriff 12, dessen Seitenschenkel 14 um eine Achse 16 schwenkbar sind. An dem unter der Schwenkachse 16 liegenden Teil der Schenkel 14 sind die Schenkel eines Bügels 18 um eine Achse 20 angelenkt, die unter der Achse 16 liegt. Dieser Bügel 18 weist einen oder mehrere, z.B. zwei, Sperriegel 22 auf, die in Bereitschaftsstellung des Mähers in Formschlußausnehmungen 24 eingreifen, die in einer Wand 26 eines Batterieschachtes 28 angeordnet sind, in den die Batterie mit Gehäuse einsetzbar ist. Wie insbesondere aus den Fig. 1 und 3 ersichtlich, werden die Sperriegel 22 durch Umlegen des Handgriffs 12 in die Formschlußausnehmungen 24 eingeschoben, wodurch die Batterie in vertikaler Richtung formschlüssig gesichert wird. Nach Hochkippen des Handgriffs 12 in die aus Fig. 1 und 2 ersichtliche Lage kann die Batterie dem Schacht entnommen und in diesen wieder eingesetzt werden. Die Batterie 10 ruht auf dem Boden des Schachtes auf elastischen Stützmitteln. Diese können aus elastischem Material, beispielsweise aus Schaumstoff, ausgebildet sein oder Federn aufweisen. Gemäß dem in Fig. 4 dargestellten Ausführungsbeispiel bestehen die Stützmittel aus Druckschraubenfedern 30. Diese elastischen Stützmittel verhindern ein schlagartiges Aufsetzen auf den Schachtboden bei Bewegung der Batterie. Um zu gewährleisten, daß die Batterie immer richtig in den Batterieschacht eingesetzt wird, sind in der Zeichnung nicht dargestellte Führungsmittel in Gestalt vertikaler Rippen und Nuten vorgesehen. Auch ist eine entsprechende Eckausbildung von Batteriegehäuse und Batterieschacht denkbar.

Die Stützmittel spannen die Batterie bzw. ihr Gehäuse gegen die Verriegelungsmittel vor, so daß die Batterie im Betrieb sicher fixiert bleibt.

Zur Kontaktierung trägt die Batterie bzw. ihr Gehäuse in einer Seitenwand mehrere Kontaktfahnen 32, die in Vertikalrichtung parallel zueinander verlaufend vorgesehen sind. Im Batterieschacht ist eine entsprechende Anzahl von Kontaktfedern 34 angeordnet. Diese als Blattfedern ausgebildeten Kontaktfedern 34 sind an ihrem oberen Ende eingespannt und liegen den Kontaktfahnen 32 der eingesetzten Batterie unter Vorspannung an. Diese Vorspannung wird durch Druckfedern 36 erhöht, die auf die Kontaktfedern einwirken und eine sichere Kontaktgabe auch bei den hohen im Betrieb fließenden Strömen gewährleisten.

Wie ersichtlich, sind die Kontaktierungsmittel 32, 34, 36 von den mechanischen Verriegelungsmitteln 18, 22, 24 getrennt. Die Schleifkontaktausbildung gewährleistet jeweils beim Einsetzen und beim Herausnehmen der Batterie eine Selbstreinigung der Kontakte. Selbst wenn im Betrieb aus irgendwelchen Gründen eine Bewegung zwischen Batterie bzw. Batteriegehäuse und Batterieschacht stattfindet, so wird dadurch die Stromübertragung nicht gestört, weil allenfalls ein Schleifen der Kontakte 32 und 34 aufeinander erfolgt.

Wie aus Fig. 5 ersichtlich, können die Stützfedern 30 auf eine Trägerplatte 38 wirken, die den Batterieschachtboden bildet und die Batterie bzw. deren Gehäuse abstützt.

Gemäß dem dargestellten Ausführungsbeispiel ist der Batterieschacht im Rasenmäherchassis in vertikaler Anordnung vorgesehen. Es ist jedoch auch denkbar, den Schacht horizontal auszubilden, wobei die Stützmittel, die Verriegelungsmittel und die Kontaktmittel in entsprechender Weise so auszubilden sind, daß ein seitliches Einschieben mit einer Schleifkontaktverbindung und einer seitlichen Verriegelung zustandekommt.

### Bezugszeichenliste

- 10: Batterie(gehäuse)
- 12: Handgriff
- 14: Seitenschenkel
- 16: Achse
- 18: Bügel
- 20: Achse
- 22: Sperriegel
- 24: Formschlußausnehmungen
- 26: Wand
- 28: Batterieschacht
- 30: Druckschraubenfedern
- 32: Kontaktfahnen
- 34: Kontaktfedern
- 36: Druckschraubenfedern
- 38: Trägerplatte

## Patentansprüche

1. Rasenmäher mit einem durch eine aufladbare Batterie gespeisten Elektromotor zum Antrieb der Schneidwerkzeuge mit den folgenden Merkmalen:
- es ist eine Halterung (28) für die Batterie (10) am Chassis vorgesehen;
- die Batterie ist mit einem Handgriff (12) versehen, mit dem sie aus der Halterung entnommen und in diese eingesetzt werden kann;
- die Batterie weist elektrische Kontakte (32) auf, die beim Einsetzen der Batterie in die Halterung mit Gegenkontakten (34) des Antriebskreises in Kontaktberührung kommen;
- die Batterie wird durch Festlegemittel (22) in der Halterung mechanisch gesichert;
dadurch gekennzeichnet, daß
- die Festlegemittel von den Kontaktierungsmitteln getrennt sind und aus einer Formschlußverriegelung bestehen;
- die Halterung (28) Formschlußausnehmungen (24) aufweist und
- der Handgriff (12) schwenkbar gelagert und mit Sperriegeln (22) gekoppelt ist, die beim Umlegen des Griffs (12) in die Formschlußausnehmungen eingreifen und beim Hochheben entriegelt werden.

2. Rasenmäher nach Anspruch 1,
dadurch gekennzeichnet, daß die Halterung als Schacht (28) ausgebildet ist, der im oberen Bereich einer Wandung die Formschlußausnehmungen (24) aufweist.

3. Rasenmäher nach Anspruch 1,
dadurch gekennzeichnet, daß die Sperriegel (22) an den Schenkeln (14) des Handgriffs benachbart zur Schwenkachse angelenkt sind.

4. Rasenmäher nach Anspruch 3,
dadurch gekennzeichnet, daß die Sperriegel (22) am Mittelschenkel eines Bügels (18) ansetzen, der an den beiden Handgriffschenkeln (14) angelenkt ist.

5. Rasenmäher nach den Ansprüchen 1 bis 4,
dadurch gekennzeichnet, daß die Sperriegel (22) horizontal am Batterieoberteil geführt sind.

6. Rasenmäher nach einem der Ansprüche 1 - 5,
dadurch gekennzeichnet, daß am Boden des Batterieschachtes (28) elastische Stützmittel (30) angeordnet sind.

7. Rasenmäher nach Anspruch 6,
dadurch gekennzeichnet, daß die Stützmittel (30) die Sperriegel (22) gegen den Rand der Formschlußausnehmungen (24) vorspannen.

8. Rasenmäher nach den Ansprüchen 6 und 7,
dadurch gekennzeichnet, daß die Stützmittel als Federn, z.B. Druckschraubenfedern (30), ausgebildet sind, die unmittelbar oder mittelbar auf den Batterieboden einwirken.

9. Rasenmäher nach Anspruch 1,
dadurch gekennzeichnet, daß die Batteriekontakte unabhängig von den Festlegemitteln kontaktiert werden.

10. Rasenmäher nach den Anspüchen 1 und 9,
dadurch gekennzeichnet, daß die Batteriekontankte in einer Seitenwand der Batterie (10) angeordnet und als Schleifkontakte ausgebildet sind, die mit den als Schleifkontakte ausgebildeten Gegenkontakten des Chassis zusammenwirken.

11. Rasenmäher nach Anspruch 10,
dadurch gekennzeichnet, daß die Gegenkontakte Blattfedern (34) sind, die individuell durch Druckschraubenfedern (36) abgestützt sind.

12. Rasenmäher nach einem der Ansprüche 1 bis 11,
dadurch gekennzeichnet, daß die Batterie (10) von einem Gehäuse umschlossen ist, das den Handgriff, die Festlegemittel und die Kontakte lagert.

13. Rasenmäher nach Anspruch 1,
dadurch gekennzeichnet, daß die Batterie (10) fakultativ auch einen Fahrantriebsmotor speist.

14. Rasenmäher nach Anspruch 1,
dadurch gekennzeichnet, daß der Batterie (10) ein Ladegerät zugeordnet ist, dessen Kontakte gemäß Anspruch 10 und 11 ausgebildet sind.

15. Rasenmäher nach einem der Ansprüche 1 bis 14,
dadurch gekennzeichnet, daß Batteriegehäuse und Batterieschacht (28) mit einander entsprechenden Paßorientierungsflächen ausgerüstet sind.

## Claims

1. Lawnmower with an electric motor powered by a rechargeable battery for driving the cutting tools, comprising the following features:
- a mounting (28) is provided for the battery (10) on the chassis;
- the battery is provided with a handle (12) by means of which it can be removed from the mounting and inserted thereinto;
- the battery incorporates electrical contacts (32) which touch and create a contact with mating contacts (34) on the drive circuit as the battery is being inserted into the mounting;
- the battery is secured mechanically in the mounting by locating means (22);
characterised in that
- the locating means are separate from the contact means and consist of a form-closure interlocking device;
- the mounting (28) incorporates form-closure rebates (24) and
- the handle (12) is swivel-mounted and coupled to safety catches (22) which engage the form-closure rebates when the handle (12) is folded down and released when it is raised.

2. Lawnmower as claimed in claim 1,
characterised in that the mounting is configured as a well (28) which incorporates the form-closure rebates (24) in the upper portion of a wall.

3. Lawnmower as claimed in claim 1,
characterised in that the safety catches (22) are hinged on the side-pieces (14) of the handle, adjacent to the swivelling axis.

4. Lawnmower as claimed in claim 3,
characterised in that the safety catches (22) are attached to the centre arm of a bracket (18) which is hinged at the two handle side-pieces (14).

5. Lawnmower as claimed in claims 1 to 4,
characterised in that the safety catches (22) are positioned horizontally on the upper part of the battery.

6. Lawnmower as claimed in any of claims 1 to 5,
characterised in that flexible support means (30) are arranged on the floor of the battery well (28).

7. Lawnmower as claimed in claim 6,
characterised in that the support means (30) pretension the safety catches (22) against the rim of the form-closure rebates (24).

8. Lawnmower as claimed in claims 6 and 7,
characterised in that the support means are in the form of springs, e.g. pressing screw springs (30), which act directly or indirectly on the battery floor.

9. Lawnmower as claimed in claim 1,
characterised in that contact is made with the battery contacts independently of the locating means.

10. Lawnmower as claimed in claims 1 and 9,
characterised in that the battery contacts are arranged in a side wall of the battery (10) and are in the form of sliding-action contacts which cooperate with the mating contacts of the chassis which are in the form of sliding-action contacts.

11. Lawnmower as claimed in claim 10,
characterised in that the mating contacts are leaf springs (34) which are individually supported by pressing screw springs (36).

12. Lawnmower as claimed in any of claims 1 to 11,
characterised in that the battery (10) is surrounded by an enclosure which carries the handle, the locating means and the contacts.

13. Lawnmower as claimed in claim 1,
characterised in that the battery (10) optionally also powers a drive propulsion motor.

14. Lawnmower as claimed in claim 1, characterised in that associated with the battery (10) is
a charger, the contacts of which are configured in accordance with Claims 10 and 11.

15. Lawnmower as claimed in any of claims 1 to 14,
characterised in that the battery enclosure and the battery well (28) are equipped with mutually corresponding fit alignment surfaces.

## Revendications

1. Tondeuse à gazon comprenant, pour l'entraînement des outils de coupe, un moteur électrique alimenté par un accumulateur rechargeable, ayant les caractéristiques suivantes :
- un logement (28) est prévu pour l'accumulateur (10) sur le châssis de la tondeuse ;
- une poignée (12) est prévue sur l'accumulateur pour permettre de retirer ce dernier du logement et de le mettre en place dans le logement ;
- l'accumulateur présente des contacts électriques (32) qui, lors de la mise en place de l'accumulateur dans le logement, entrent en contact avec des contacts complémentaires (34) du circuit d'entraînement ;
- l'accumulateur est immobilisé mécaniquement dans le logement par des moyens de fixation (22),
**caractérisée** par le fait que les moyens de fixation sont séparés des moyens de contact et sont constitués par des moyens de verrouillage par complémentarité de forme ; le logement (28) présente des évidements de verrouillage (24), et
la poignée (12) est montée pivotante et couplée avec des verrous (22) qui pénètrent dans lesdits évidements lors du rabattement de la poignée (12) et sont déverrouillés lors du relèvement.

2. Tondeuse à gazon suivant la revendication 1, **caractérisée** par le fait que le logement est réalisé sous forme de puits (28) qui présente les évidements de verrouillage (24) dans la zone supérieure d'une paroi.

3. Tondeuse à gazon suivant les revendications 1 et 2, **caractérisée** par le fait que les verrous (22) sont articulés sur les branches (14) de la poignée au voisinage de l'axe de pivotement de cette dernière.

4. Tondeuse à gazon suivant la revendication 3, **caractérisée** par le fait que les verrous (22) sont disposés sur la branche médiane d'un étrier (18) qui est articulé sur les deux branches (14) de la poignée.

5. Tondeuse à gazon suivant les revendications 1 à 4, **caractérisée** par le fait que les verrous (22) sont guidés horizontalement sur la partie supérieure de l'accumulateur.

6. Tondeuse à gazon suivant l'une des revendications 1-5, **caractérisée** par le fait que des moyens de support (30) élastiques sont disposés sur le fond du puits d'accumulateur (28).

7. Tondeuse à gazon suivant la revendication 6, **caractérisée** par le fait que les moyens de support (30) sollicitent les verrous (22) contre le bord des évidements de verrouillage (24).

8. Tondeuse à gazon suivant les revendications 6 et 7, **caractérisée** par le fait que les moyens de support sont réalisés sous forme de ressorts, par exemple de ressorts hélicoïdaux de compression (30) agissant directement ou indirectement sur le fond de l'accumulateur.

9. Tondeuse à gazon suivant la revendication 1, **caractérisée** par le fait que l'établissement du contact avec les contacts de l'accumulateur s'effectue indépendamment des moyens de fixation.

10. Tondeuse à gazon suivant les revendications 1 et 9, **caractérisée** par le fait que les contacts de l'accumulateur sont disposés dans une paroi latérale de l'accumulateur (10) et sont réalisés sous forme de contacts frotteurs qui coopèrent avec les contacts complémentaires du châssis, réalisés sous forme de contacts frotteurs.

11. Tondeuse à gazon suivant la revendication 10, **caractérisée** par le fait que les contacts complémentaires sont des lames élastiques (34) sollicitées individuellement par des ressorts hélicoïdaux de compression (36).

12. Tondeuse à gazon suivant l'une des revendications 1 à 11, **caractérisée** par le fait que l'accumulateur (10) est entouré d'un boîtier sur lequel sont disposés la poignée, les moyens de fixation et les contacts.

13. Tondeuse à gazon suivant la revendication 1, **caractérisée** par le fait que l'accumulateur (10) alimente facultativement également un moteur de propulsion.

14. Tondeuse à gazon suivant la revendication 1, **caractérisée** par le fait que l'accumulateur (10) est associé à un chargeur dont les contacts sont réalisés suivant les revendications 10 et 11.

15. Tondeuse à gazon suivant l'une des revendications 1 à 14, **caractérisée** par le fait que le boîtier d'accumulateur et le puits d'accumulateur (28) sont équipés de surfaces de guidage (détrompage) complémentaires.
